# EUROPEAN PATENT APPLICATION

(11) **EP 4 810 653 A1**
(43) Date of publication of application: **23.09.2026**
(21) Application number: 24912836.4
(22) Date of filing: 24.12.2024
(51) Int. Cl.: C23C 20/06

(54) **STAINLESS STEEL FOIL**

(30) Priority: 27.12.2023 JP 2023221972
(71) Applicant: NIPPON STEEL CHEMICAL & MATERIAL CO., LTD., Tokyo 103-0027 (JP)
(72) Inventor: YAMAGUCHI, Sawako, Tokyo 100-8071 (JP); HASHINO, Eiji, Tokyo 100-8071 (JP); HAGIWARA, Yoshiaki, Tokyo 103-0027 (JP); UNNO, Hiroto, Tokyo 103-0027 (JP)
(74) Representative: Zimmermann & Partner Patentanwälte mbB
(86) International application number: PCT/JP2024/045738
(87) International publication number: WO 2025/142950

(57) **Abstract**

A stainless steel foil that has excellent durability against bending stress is provided. A stainless steel foil according to the present disclosure includes a stainless steel substrate, and a siloxane polymer film formed on at least one surface of the stainless steel substrate. The stainless steel foil further includes an (Fe, Cr) oxide having an NaCl-type crystal structure at an interface between the stainless steel substrate and the siloxane polymer film.

## Description

### TECHNICAL FIELD

The present disclosure relates to a stainless steel foil, and more particularly relates to a stainless steel foil that can be applied as a material for a substrate of an electronic device.

### BACKGROUND ART

To date, resins and glass have been widely used as materials for substrates of electronic devices. In recent years, metal materials that are superior in heat resistance and gas barrier property compared to resin and are superior in toughness compared to glass have been attracting attention. On the other hand, materials for substrates of electronic devices also need to have flatness and insulating ability. Therefore, metal foils in which an insulation layer is formed have been proposed as materials for substrate of electronic devices.

Specifically, Japanese Patent Application Publication No. 2013-236029 (Patent Literature 1) proposes a substrate for semiconductor elements that has an alkali metal silicate layer formed by a liquid phase technique on a metallic substrate. In this substrate for semiconductor elements, a clad material in which one side or both sides of an aluminum, stainless steel, or steel sheet is integrated with an aluminum sheet is used as a metallic substrate, and the contact angle of water on the surface of the alkali metal silicate layer is 20 to 90°. Patent Literature 1 discloses that according to this substrate for semiconductor elements, formation of fine precipitates in the alkali metal silicate layer is suppressed, and thus water resistance can be ensured.

Further, Japanese Patent Application Publication No. 2003-247078 (Patent Literature 2) proposes a stainless steel foil that is coated on one surface or both surfaces with an inorganic-organic hybrid film, which has an inorganic three-dimensional network structure mainly composed of siloxane bonds as a skeleton and in which at least one bridging oxygen atom of the skeleton is replaced with an organic group and/or a hydrogen atom. Patent Literature 2 discloses that this stainless steel foil is excellent in properties such as heat resistance, workability, flatness, and insulating ability, and has flexibility when used as an electronic material substrate.

### CITATION LIST

### PATENT LITERATURE

Patent Literature 1: Japanese Patent Application Publication No. 2013-236029
Patent Literature 2: Japanese Patent Application Publication No. 2003-247078

### SUMMARY OF INVENTION

### TECHNICAL PROBLEM

In this connection, with the development of electronic equipment, there is a demand for materials that can be used in more severe environments than in the past. Specifically, for example, development of deformable thin electronic devices such as deformable displays, deformable transistors, deformable batteries, and deformable sensors has been progressing. Such deformable thin electronic devices are repeatedly subjected to bending stress during use. Therefore, a deformable thin electronic device is preferably less prone to cracks even when repeatedly subjected to bending stress.

Here, among metal foils, stainless steel foils have excellent durability against bending stress. Note that, the term "steel foil" as used in the present description means a steel sheet that has a thickness of 150 µm or less. Further, in the present description, the fact that cracks are less likely to occur even when repeatedly subjected to bending stress is also referred to as "has excellent durability against bending stress". That is, there is a growing need for a stainless steel foil in which an insulation layer is formed and which has excellent durability against bending stress.

The aforementioned Patent Literatures 1 and 2 propose metal foils in which an insulation layer is formed and which can be applied as substrates of electronic devices. On the other hand, in the aforementioned Patent Literatures 1 and 2, there is no discussion regarding increasing durability against bending stress to an extent that the metal foils can be applied to deformable thin electronic devices.

An objective of the present disclosure is to provide a stainless steel foil that has excellent durability against bending stress.

### SOLUTION TO PROBLEM

A stainless steel foil according to the present disclosure includes:
a stainless steel substrate, and
a siloxane polymer film formed on at least one surface of the stainless steel substrate,
wherein, at an interface between the stainless steel substrate and the siloxane polymer film, the stainless steel foil further includes:
   an (Fe, Cr) oxide having an NaCl-type crystal structure.

### ADVANTAGEOUS EFFECT OF INVENTION

A stainless steel foil according to the present disclosure has excellent durability against bending stress.

### BRIEF DESCRIPTION OF DRAWINGS

[FIG. 1] FIG. 1 is a schematic diagram illustrating a diffraction pattern with respect to a siloxane polymer film in TEM selected area.
[FIG. 2] FIG. 2 is a schematic diagram illustrating a diffraction pattern with respect to a region including a siloxane polymer film and an (Fe, Cr) oxide in TEM selected area.
[FIG. 3] FIG. 3 is a schematic diagram illustrating a TEM selected area diffraction pattern with respect to a stainless steel substrate in TEM selected area.

### DESCRIPTION OF EMBODIMENTS

The present inventors have conducted detailed studies pertaining to a stainless steel foil that has excellent durability against bending stress. As a result, the present inventors obtained the following finding.

First, the present inventors conducted studies regarding an insulation layer formed on a stainless steel substrate. Specifically, the present inventors have found that by forming a siloxane polymer film on a stainless steel substrate, not only insulating ability but also heat resistance and flatness can be imparted to a stainless steel foil. Further, in the case of deformable thin electronic devices, an insulation layer may sometimes be formed only on one surface of the substrate. Therefore, in a stainless steel foil according to the present embodiment, a siloxane polymer film is formed on at least one surface of a stainless steel substrate. Here, the term "siloxane polymer film" means a film composed of a polymer having siloxane bonds as a main skeleton.

On the other hand, even when a siloxane polymer film was formed in a stainless steel foil, in some cases the stainless steel foil did not have excellent durability against bending stress. Therefore, the present inventors investigated various techniques for increasing the durability against bending stress of a stainless steel foil in which a siloxane polymer film was formed. As a result, the present inventors obtained the following finding.

As a result of detailed investigations conducted by the present inventors, it has been revealed that when a crack occurs as a result of bending stress applied to a stainless steel foil in which a siloxane polymer film is formed, the crack occurs in the siloxane polymer film, and not in the stainless steel substrate. In other words, if it is difficult for a crack to occur in the siloxane polymer film even when the stainless steel foil is subjected to bending stress, there is a possibility that the durability of the stainless steel foil against bending stress can be increased.

As a result of further detailed investigations by the present inventors, it has been revealed that if an oxide having a specific crystal structure can be dispersed at the interface between the stainless steel foil and the siloxane polymer film, the durability of the stainless steel foil against bending stress will be increased. Specifically, the stainless steel foil according to the present embodiment includes an (Fe, Cr) oxide having an NaCl-type crystal structure at the interface between the stainless steel substrate and the siloxane polymer film. As a result, the stainless steel foil according to the present embodiment has excellent durability against bending stress.

The reason why the durability of the stainless steel foil against bending stress is increased by containing an (Fe, Cr) oxide having an NaCl-type crystal structure at the interface between the stainless steel substrate and the siloxane polymer film has not been clarified in detail. However, the present inventors surmise that the reason is as follows. As described above, there is a possibility that the durability of the stainless steel foil against bending stress will increase if it is difficult for a crack to occur in the siloxane polymer film. In particular, in the siloxane polymer film, a crack is liable to occur in the vicinity of the interface with the stainless steel substrate. Therefore, in the siloxane polymer film, if precipitates with low hardness, that is, soft precipitates can be finely dispersed in the vicinity of the interface with the stainless steel substrate, there is a possibility that stress concentration to the siloxane polymer film can be alleviated and the occurrence of a crack in the siloxane polymer film can be suppressed.

On the other hand, if precipitates with high hardness are dispersed in the siloxane polymer film, there is a risk that, when bending stress is applied, stress concentration will occur around the precipitates with high hardness and will serve as a starting point for a fracture. In other words, if stress concentration to the siloxane polymer film can be alleviated, and precipitates that are not likely to serve as starting points for a fracture are dispersed, the occurrence of a crack in the siloxane polymer film can be suppressed.

Here, as defined by JIS G 0203: 2009, the stainless steel contains chromium (Cr) and iron (Fe). Further, magnetite ((Fe, Cr)₃O₄) and hematite ((Fe, Cr)₂O₃) and the like are known as stable (Fe, Cr) oxides. Among these, wustite ((Fe, Cr)_{1-y}O) has an NaCl-type crystal structure, and has a low hardness as compared to magnetite and hematite and the like, and is not likely to serve as a starting point for a fracture. Therefore, it is considered that if wustite is dispersed at the interface between the stainless steel substrate and the siloxane polymer film, not only can stress of the siloxane polymer film be alleviated by the wustite, but furthermore, it will be difficult for the wustite to serve as a starting point for a fracture, and therefore the occurrence of a crack in the siloxane polymer film can be suppressed.

Note that, there is also a possibility that a different mechanism to the mechanism described above surmised by the present inventors is the mechanism by which the durability of the stainless steel foil against bending stress is increased by containing an (Fe, Cr) oxide having a NaCl-type crystal structure at the interface between the stainless steel substrate and the siloxane polymer film. However, the fact that the durability of the stainless steel foil against bending stress is increased by containing an (Fe, Cr) oxide having a NaCl-type crystal structure at the interface between the stainless steel substrate and the siloxane polymer film has been demonstrated by examples described later.

The gist of the stainless steel foil according to the present embodiment, which was completed based on the above findings, is as follows.

[1] A stainless steel foil, including:
   a stainless steel substrate, and
   a siloxane polymer film formed on at least one surface of the stainless steel substrate,
   wherein, at an interface between the stainless steel substrate and the siloxane polymer film, the stainless steel foil further includes:
      an (Fe, Cr) oxide having an NaCl-type crystal structure.
[2] The stainless steel foil according to [1], wherein, in the (Fe, Cr) oxide having an NaCl-type crystal structure:
   an atomic ratio of Cr to Fe is between 0.2 and 0.6.
[3] The stainless steel foil according to [1], wherein:
   a thickness of the siloxane polymer film is 0.3 to 1.0 µm.
[4] The stainless steel foil according to [2], wherein:
   a thickness of the siloxane polymer film is 0.3 to 1.0 µm.
[5] The stainless steel foil according to any one of [1] to [4], wherein:
   a thickness of the stainless steel substrate is 5 to 80 µm.

Hereinafter, the stainless steel foil according to the present embodiment will be described.

### [Stainless steel foil]

The stainless steel foil according to the present embodiment includes a stainless steel substrate, and a siloxane polymer film formed on at least one surface of the stainless steel substrate. Here, the stainless steel foil according to the present embodiment may also include another structure in addition to the stainless steel substrate and the siloxane polymer film. For example, the stainless steel foil according to the present embodiment may have another film on the siloxane polymer film. For example, furthermore, among the surfaces of the stainless steel substrate, the stainless steel substrate may have another film on a surface on which the siloxane polymer film is not formed. The other film, for example, may be a resin film, or may be a film which is mainly composed of an inorganic compound.

### [Stainless steel substrate]

It suffices that the stainless steel substrate according to the present embodiment is a substrate composed of stainless steel. That is, in the present embodiment, the type of stainless steel constituting the stainless steel substrate is not particularly limited. The stainless steel, for example, may be ferritic stainless steel, may be martensitic stainless steel, may be austenitic stainless steel, may be a duplex ferritic-martensitic stainless steel, or may be a duplex ferritic-austenitic stainless steel.

In the present embodiment, the thickness of the stainless steel substrate is not particularly limited and may be, for example, 5 to 80 µm. As described above, as used in the present description, the term "steel foil" means a steel sheet having a thickness of 150 µm or less. In other words, in the stainless steel foil according to the present embodiment, the thickness of the stainless steel foil is 150 µm or less. As described above, the stainless steel foil according to the present embodiment includes at least a stainless steel substrate and a siloxane polymer film. Therefore, if the thickness of the stainless steel substrate is 5 to 80 µm, the thickness of the stainless steel foil can be stably made 150 µm or less.

Preferably, the thickness of the stainless steel substrate according to the present embodiment is 5 to 60 µm, more preferably is 5 to 50 µm, further preferably is 5 to 35 µm, and further preferably is 5 to 20 µm. If the thickness of the stainless steel substrate is less than 5 µm, it may be difficult to produce a stainless steel substrate having a stable thickness. On the other hand, if the thickness of the stainless steel substrate is more than 60 µm, the rigidity of the stainless steel substrate may become too high and the deformation resistance of the stainless steel foil may become too high. Therefore, in the present embodiment, preferably the thickness of the stainless steel substrate is set within the range of 5 to 60 µm.

### [Siloxane polymer film]

The stainless steel foil according to the present embodiment includes a siloxane polymer film formed on at least one surface of the stainless steel substrate. A siloxane polymer film has excellent insulating ability, excellent heat resistance, excellent chemical stability, and excellent flatness. Therefore, by forming a siloxane polymer film on a surface of the stainless steel substrate, the performance required as a substrate of a deformable thin electronic device can be imparted to the stainless steel foil.

In the present embodiment, a siloxane polymer film may be formed on both sides of the stainless steel substrate, or may be formed on only one side of the stainless steel substrate. Further, as used in the present description, the term "siloxane polymer film" means a film having siloxane bonds developed into a three-dimensional network structure as a main skeleton. That is, in the present embodiment, in the siloxane polymer film, a part of the siloxane bonds that are the main skeleton may be replaced with a functional group (organic group) or another atom.

In the present embodiment, preferably the siloxane polymer film is composed of a polymer in which some bridging oxygen atoms in the siloxane skeleton are replaced with an organic group. In other words, preferably the oxygen concentration [O] (mol/L) and the silicon concentration [Si] (mol/L) in the siloxane polymer film satisfy the expression 2.5 < [O]/[Si] < 3.9. In this case, the toughness of the siloxane polymer film increases, and the durability against bending stress increases further. In addition, the term "organic group" in the siloxane polymer film refers to one type or more selected from alkyl groups, phenyl groups, and amino groups.

In the present embodiment, although not particularly limited, the thickness of the siloxane polymer film is, for example, 0.3 to 5.0 µm. As used herein, the phrase "thickness of the siloxane polymer film" means the thickness of a siloxane polymer film formed on one side of the stainless steel substrate. That is, in a case where a siloxane polymer film is formed on both sides of the stainless steel substrate, the total of the thicknesses of the siloxane polymer films may be 0.6 to 10.0 µm.

If the thickness of the siloxane polymer film is less than 0.3 µm, the aforementioned insulating ability, heat resistance, and flatness may not be sufficiently obtained. On the other hand, if the thickness of the siloxane polymer film is more than 5.0 µm, the toughness of the siloxane polymer film may decrease and durability against bending stress may not be obtained. Further preferably, the thickness of the siloxane polymer film is 0.3 to 1.0 µm. In such case, the stainless steel foil will have even more excellent durability against bending stress.

In the present embodiment, the thickness of the siloxane polymer film is measured using a scanning electron microscope (SEM). A cross-section of the stainless steel foil in which the siloxane polymer film is formed is prepared using a cross-section polishing method. The formed cross-section is observed using an SEM. The thickness of the siloxane polymer film is measured based on the obtained observation image. The thickness can be measured by the following method.

### [(Fe, Cr) oxide having NaCl-type crystal structure]

The stainless steel foil according to the present embodiment contains an (Fe, Cr) oxide having an NaCl-type crystal structure at an interface between the stainless steel substrate and the siloxane polymer film. As described above, the phrase "(Fe, Cr) oxide having an NaCl-type crystal structure" essentially means wustite ((Fe, Cr)O).

Wustite is formed as fine crystals at the interface between the stainless steel substrate and the siloxane polymer film. Therefore, wustite can suppress the occurrence of cracks in the siloxane polymer film when bending stress is applied. In addition, the hardness of wustite is low compared to other stable (Fe, Cr) oxides. Therefore, it is difficult for stress concentration to occur even when bending stress is applied, thus making it difficult to serve as a starting point for a fracture. In the stainless steel foil according to the present embodiment, the distribution state of wustite is not particularly limited. Specifically, wustite may be distributed in the form of layers or may be distributed in the form of particles.

Accordingly, the stainless steel foil according to the present embodiment contains an (Fe, Cr) oxide having an NaCl-type crystal structure at the interface between the stainless steel substrate and the siloxane polymer film. As a result, the stainless steel foil according to the present embodiment has excellent durability against bending stress.

Further, while the (Fe, Cr) oxide contains Fe and Cr as metallic elements, the ratio between Fe and Cr is not particularly limited. The Cr/Fe atomic ratio in the (Fe, Cr) oxide may be, for example, in the range of 0.2 to 0.7, or may be in the range of 0.3 to 0.6. Preferably, the Cr/Fe atomic ratio in the (Fe, Cr) oxide is in the range of 0.3 to 0.5. In such case, the durability of the stainless steel foil against bending stress is further increased.

Note that, it suffices that the (Fe, Cr) oxide has an NaCl-type crystal structure and contains Fe and Cr as metallic elements, and the contents of the elements in the (Fe, Cr) oxide are not particularly limited. However, in the (Fe, Cr) oxide according to the present embodiment, the contents of the elements are substantially as follows: Fe: 5 to 50 at% and Cr: 5 to 50 at%, with the balance being oxygen (O) and impurities.

In the present embodiment, an (Fe, Cr) oxide having an NaCl-type crystal structure is identified by the following method. The stainless steel foil according to the present embodiment is cut to obtain an observation surface that includes the thickness direction of the siloxane polymer film. The observation surface is observed using a transmission electron microscope (TEM) to identify five locations that are interfaces with the stainless steel substrate in the siloxane polymer film, and the five locations are designated as measurement points. The interfaces between the stainless steel substrate and the siloxane polymer film can be identified based on contrast.

The identified five measurement points are subjected to crystal structure analysis by selected area electron diffraction using a TEM. For example, a 200-kV field emission transmission electron microscope JEM-2100F manufactured by JEOL Ltd. can be used as the TEM. In the selected area electron diffraction, a selected area aperture is inserted to set the observation field to 3 nm, and a diffraction pattern is obtained based on an electron diffraction method. In addition, elemental analysis of the area of the selected area is performed by energy dispersive X-ray spectrometry (EDS) to identify the elements present within the area. The obtained elements within the selected area and a diffraction pattern assumed based on the crystal structure are used to identify an (Fe, Cr) oxide having an NaCl-type crystal structure. Note that, when performing the identification, for example, a database of elements and diffraction patterns, as typified by ICDD cards, may be used. In addition, the concentrations of Cr and Fe are determined in atomic percent from the results of the elemental analysis of the area of the selected area by EDS. The obtained Cr concentration (at%) is divided by the Fe concentration (at%) to determine the Cr/Fe atomic ratio in the (Fe, Cr) oxide.

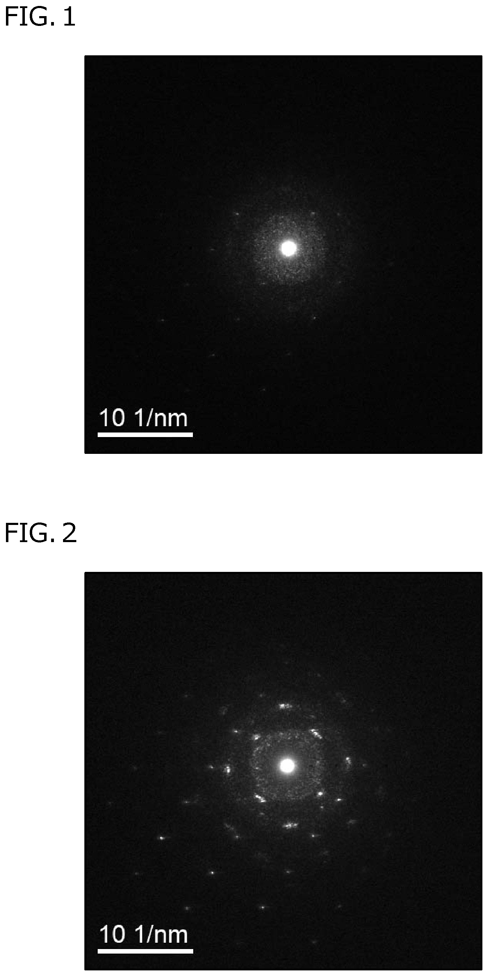

Diffraction patterns will now be described more specifically using the drawings. FIG. 1 to FIG. 3 were created using a stainless steel foil in which a siloxane polymer film was formed on a surface of a ferritic stainless steel substrate, and an (Fe, Cr) oxide having an NaCl-type crystal structure was formed at the interface between the stainless steel substrate and the siloxane polymer film.

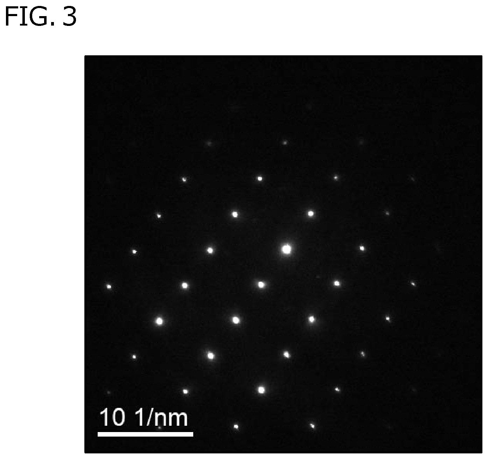

FIG. 1 is a schematic diagram illustrating a diffraction pattern with respect to a siloxane polymer film in TEM selected area. In the selected area in FIG. 1, a large white dot in the central part, and a whitish region that is thinly spread around the large white dot can be observed. Because a large proportion of the siloxane polymer film is amorphous, the whitish region is observed rather than a specific diffraction pattern. FIG. 2 is a schematic diagram illustrating a diffraction pattern with respect to a region including a siloxane polymer film and an (Fe, Cr) oxide in TEM selected area. In the selected area in FIG. 2, a diffraction pattern is observed in addition to a large white dot in the central part and a whitish region that is thinly spread around the large white dot. FIG. 3 is a schematic diagram illustrating a diffraction pattern with respect to a stainless steel substrate in TEM selected area. In the selected area in FIG. 3, a diffraction pattern of [011]ferrite-Fe can be observed.

Referring to FIG. 2 and FIG. 3, the diffraction pattern in FIG. 2 is clearly different from the diffraction pattern in FIG. 3. Specifically, the diffraction pattern that is scattered around the white region at the central part of FIG. 2 is different from the diffraction pattern of the stainless steel substrate that can be observed in FIG. 3. Further, when this diffraction pattern is combined with the results of the elemental analysis by EDS, it is possible for a person having ordinary skill in the art to identify the substance as an (Fe, Cr) oxide having an NaCl-type crystal structure.

Further, in the present embodiment, in a case where the presence of an (Fe, Cr) oxide having an NaCl-type crystal structure is identified at least at three measurement points among the five measurement points, it is determined that the stainless steel foil contains an (Fe, Cr) oxide having an NaCl-type crystal structure at the interface between the stainless steel substrate and the siloxane polymer film.

Here, in the stainless steel foil according to the present embodiment, wustite is present as very fine precipitates. Consequently, it is extremely difficult to identify wustite based on contrast by microscopic observation. Therefore, in the present embodiment, the interface between the stainless steel substrate and the siloxane polymer film is identified based on contrast, and the interface is also identified by selected area electron diffraction using a TEM. On the other hand, because the interface is identified based on contrast, there is a possibility that a measurement point may be located away from the interface. In such case, there is a possibility that wustite will not be detected at the relevant measurement point. Therefore, in the present embodiment, if it is determined that wustite has been detected at least at three measurement points among the five measurement points, it is determined that the interface between the stainless steel substrate and the siloxane polymer film contains an (Fe, Cr) oxide having an NaCl-type crystal structure.

In the present embodiment, the siloxane polymer film is identified by the following method. A pattern characteristic of an amorphous material (a so-called "halo pattern") is observed in a diffraction pattern obtained by an electron diffraction method with respect to similar measurement points identified from a similar observation surface as in the method for identifying an (Fe, Cr) oxide having an NaCl-type crystal structure described above. In addition, at the aforementioned measurement points, Si and O are detected by performing elemental analysis of the area of the selected area by EDS. Based on these results, the presence of a siloxane polymer film can be identified.

In addition, in the present embodiment, an organic group in the siloxane polymer film is identified by the following method. Specifically, an absorption spectrum is obtained by Fourier transform infrared spectroscopy (FT-IR). FT-IR can be performed using, for example, an infrared spectrophotometer with the model name "Frontier" manufactured by PerkinElmer Japan G.K. More specifically, an infrared absorption spectrum is obtained from the surface of the siloxane polymer film using the attenuated total reflection (ATR) method. In a case where, as a result, for example, an absorption peak of Si-CH₃ is observed near 1263 cm⁻¹, it can be determined that the siloxane polymer film has a methyl group as an organic group. Similarly, for example, if an absorption peak of Si-C₆H₅ is observed near 1630 cm⁻¹, it can be determined that the siloxane polymer film has a phenyl group as an organic group. Thus, it is naturally possible for a person having ordinary skill in the art to identify organic groups based on the infrared absorption spectrum of the surface of the siloxane polymer film.

### [Durability against bending stress]

The stainless steel foil according to the present embodiment includes a stainless steel substrate, and a siloxane polymer film formed on at least one surface of the stainless steel substrate, and contains an (Fe, Cr) oxide having an NaCl-type crystal structure at the interface between the stainless steel substrate and the siloxane polymer film. As a result, the stainless steel foil according to the present embodiment has excellent durability against bending stress.

A repeated bend test is performed on the stainless steel foil according to the present embodiment. Specifically, a test specimen is prepared from the stainless steel foil according to the present embodiment. The size of the test specimen is to be set to 50 mm × 100 mm. The prepared test specimen is placed in a clamshell bending tester. For example, a testing device with the model name DR11MR manufactured by YUASA SYSTEM Co., Ltd. can be used as the clamshell bending tester. Regarding the test conditions, taking the bend radius of the stainless steel foil as "R" and the thickness of the stainless steel foil as "t", the bend radius is to be set so that R/t = 150. Further, the bending angle is to be set within the range of 0 to 180°. Here, R/t is a dimensionless quantity in which the units of the numerator and the denominator are the same, and is an index indicating the severity of bending considering stress and strain that the material receives. Even in a case where R is the same, the stress and strain that the material receives increase as the thickness t of the material increases.

Under the conditions described above, the number of repeated bends until a crack occurs in the siloxane polymer film surface is defined as the number of bending cycles. If the number of bending cycles according to the above definition is 5000 cycles or more, it is determined that the stainless steel foil has excellent durability against bending stress. Furthermore, if the number of bending cycles is 20000 cycles or more, it is determined that the stainless steel foil has even more excellent durability against bending stress.

### [Method for producing stainless steel foil]

One example of a method for producing the stainless steel foil according to the present embodiment will now be described. The production method described below is one example for producing the stainless steel foil according to the present embodiment, and the method for producing the stainless steel foil according to the present embodiment may be a production method other than the production method described below. However, the production method described below is a preferred example of a method for producing the stainless steel foil according to the present embodiment. The method for producing the stainless steel foil according to the present embodiment includes a substrate preparation process, an electrical discharge treatment process, an application process, and a heat treatment process.

### [Substrate preparation process]

In the substrate preparation process, a stainless steel substrate that is the substrate of the stainless steel foil is prepared. The method for preparing the stainless steel substrate is not particularly limited, and it suffices that a well-known method is used. As the method for preparing the stainless steel substrate, for example, an intermediate steel material having a desired chemical composition may be prepared, and the intermediate steel material may be subjected to cold working. Hereinafter, this case is specifically described.

The intermediate steel material having a desired chemical composition can be appropriately selected according to the mechanical properties of the stainless steel substrate to be obtained. Here, the term "intermediate steel material" means a stainless steel sheet having a thickness of several hundred µm to several mm. In the case of preparing the stainless steel substrate by subjecting an intermediate steel material to cold working, a preferable cold working is cold rolling. The cold rolling can be performed using well-known equipment. For example, a plurality of reversible cold rolling mills may be used. In this case, the reduction rate in the cold rolling is not particularly limited. An appropriate reduction rate can be set according to the thickness of the stainless steel substrate to be obtained. Further, the stainless steel substrate after cold rolling may be subjected to an appropriate heat treatment.

As described above, the stainless steel substrate is prepared in the substrate preparation process. The stainless steel substrate may be produced by the aforementioned preferable process, or may be a stainless steel substrate produced by a third party, or may be a stainless steel substrate that is prepared by being produced in another factory other than the factory where the application process be described later is performed or at a different place of business. In short, the substrate preparation process in the present embodiment is not particularly limited, and it suffices that it is a well-known method.

### [Electrical discharge treatment process]

In the electrical discharge treatment process, the prepared stainless steel substrate is subjected to an electrical discharge treatment. By performing the electrical discharge treatment process, oxides or impurities such as an oil film on the surface of the stainless steel substrate are sufficiently removed. In addition, it is presumed that hydroxyl groups (OH groups) are also formed on the surface at such time. Although the mechanism is uncertain, it is surmised that the formation of hydroxyl groups on the surface causes an (Fe, Cr) oxide having an NaCl-type crystal structure to be stably formed at the interface between the stainless steel substrate and the siloxane polymer film in the produced stainless steel foil.

In the electrical discharge treatment process, specifically, one of a pair of metal electrodes is coated with an insulator. A high-frequency, high-voltage electric field is applied between the metal electrodes in air. As a result, a corona discharge occurs between the pair of metal electrodes. Next, the prepared stainless steel substrate is introduced onto the metal electrode coated with the insulator. The effect of an electrical discharge treatment is generally considered to be proportional to the input power per unit area, that is, the discharge amount. The discharge amount is expressed as P/(L × v), where P is the discharge power (W), L is the discharge electrode length (m), and v is the speed (m/min) of the substrate passing beneath the metal electrode. Although not particularly limited, the discharge amount is preferably 800 to 2000 (W × min/m²).

### [Application process]

In the application process, a composition for a siloxane polymer film is applied to the stainless steel substrate subjected to the electrical discharge treatment. The composition for the siloxane polymer film can be prepared according to the siloxane polymer film to be obtained. For example, the composition may be prepared by diluting one or more organoalkoxysilanes with an organic solvent and performing hydrolysis. Here, the organoalkoxysilane is represented by the general formula RₙSi(OR')₄₋ₙ (where R and R' are hydrogen atoms and/or organic groups, and n is a natural number equal to or less than 3).

In a case where the composition is prepared by the method described above, the organoalkoxysilane can be selected according to the siloxane polymer film to be obtained. For example, one or more types selected from diethoxydimethylsilane, dimethoxydimethylsilane, methyltrimethoxysilane, methyltriethoxysilane, ethyltrimethoxysilane, ethyltriethoxysilane, propyltrimethoxysilane, propyltriethoxysilane, isobutyltrimethoxysilane, isobutyltriethoxysilane, dimethoxymethyl-3,3,3-trifluoropropylsilane, diisobutyldimethoxysilane, trimethylmethoxysilane, dimethoxydimethylsilane, diethoxydimethylsilane, phenyltriethoxysilane, methacryloxypropyltrimethoxysilane, methacryloxypropyltriethoxysilane, aminopropyltriethoxysilane, and aminoethylaminopropyltriethoxysilane can be used. Preferably, the organoalkoxysilane contains a methyl group and/or an ethyl group and/or a phenyl group as an organic group. In such case, the thermal decomposition temperature of the organoalkoxysilane will increase and it will be easier to control the amount of residual organic groups after the heat treatment process.

The method for applying the composition is not particularly limited, and it suffices to use a well-known method. For example, the composition may be applied using a bar coater, may be applied using a roll coater, may be applied by a spraying method, may be applied by dipping, or may be applied by a spin coating method. In this case, an appropriate solvent can be selected and used depending on the application method. Further, the thickness of the siloxane polymer film in the produced stainless steel foil can be appropriately adjusted by appropriately adjusting the application amount during the application process.

In the application process according to the present embodiment, in addition, the applied composition is dried. Specifically, it is preferable to dry the applied composition by performing low-temperature heating at approximately 100 to 180°C in the atmosphere. Note that, although not particularly limited, the drying time is, for example, 0.5 to 30 minutes. By performing the above processes, the composition is applied to the prepared stainless steel substrate and dried.

### [Heat treatment process]

In the heat treatment process, the stainless steel substrate to which the composition has been applied is subjected to a heat treatment to cure the siloxane polymer film. In the heat treatment process according to the present embodiment, preferably the stainless steel substrate is held at a temperature of 350 to 500°C for 5 to 300 minutes in a nitrogen atmosphere containing trace amounts of oxygen.

As described above, the (Fe, Cr) oxide having an NaCl-type crystal structure is substantially wustite. That is, in the stainless steel foil according to the present embodiment, by selectively forming wustite and not magnetite or hematite, the durability against bending stress is increased. Further, it is surmised that the Fe and Cr contained in the (Fe, Cr) oxide originate from the stainless steel substrate. That is, it is surmised that in the heat treatment process, wustite is obtained by a reaction between oxygen contained in the atmosphere that has permeated into the siloxane polymer film and the Fe and Cr of the stainless steel substrate. Based on the above surmise, in the heat treatment process according to the present embodiment, preferably the heat treatment atmosphere consists of oxygen at a concentration of 50 to 1000 ppm, with the balance being nitrogen and impurities. Note that, the concentration ratio between Fe and Cr in the (Fe, Cr) oxide tends to vary depending on the oxygen concentration during the heat treatment. Specifically, the higher the oxygen concentration in the atmosphere is, the higher the Cr ratio tends to become.

That is, in the method for producing the stainless steel foil according to the present embodiment, preferably, after impurities are removed and hydroxyl groups are formed on the surface of the prepared stainless steel substrate by performing an electrical discharge treatment, a composition for a siloxane polymer film is applied to the surface, and thereafter the stainless steel substrate is held at 350 to 500°C for 5 to 300 minutes in an atmosphere consisting of oxygen at a concentration of 50 to 1000 ppm, with the balance being nitrogen and impurities. In this case, a stainless steel foil containing an (Fe, Cr) oxide having an NaCl-type crystal structure at the interface between the stainless steel substrate and the siloxane polymer film can be stably produced.

The stainless steel foil according to the present embodiment can be produced by performing the above processes. Note that, as mentioned above, the production process described above is one preferable example for producing the stainless steel foil according to the present embodiment, and a method for producing the stainless steel foil according to the present embodiment is not limited to the method described above. Hereinafter, the stainless steel foil according to the present embodiment will be described more specifically by way of examples.

### EXAMPLES

Stainless steel substrates of respective test numbers having a thickness shown in Table 1 were prepared. Note that, the steel type of the stainless steel substrate of each test number corresponded to either ferritic stainless steel equivalent to SUS 444 defined in JIS G 4305(2012) or austenitic stainless steel equivalent to SUS 304 defined in JIS G 4305(2012).

**[Table 1]**

| TABLE 1 | | | | | |
|---|---|---|---|---|---|
| Test Number | Stainless Steel Substrate | | Electrical Discharge Treatment | Composition | Heat Treatment Conditions |
| | Steel Type | Thickness (µm) | | | |
| 1 | SUS444 | 10 | Performed | A | A |
| 2 | SUS444 | 10 | Performed | A | A |
| 3 | SUS444 | 10 | Performed | A | B |
| 4 | SUS444 | 10 | Performed | A | B |
| 5 | SUS444 | 10 | Performed | A | B |
| 6 | SUS444 | 10 | Performed | A | C |
| 7 | SUS444 | 25 | Performed | A | B |
| 8 | SUS444 | 50 | Performed | A | B |
| 9 | SUS444 | 60 | Performed | A | B |
| 10 | SUS444 | 10 | Performed | A | B |
| 11 | SUS444 | 10 | Performed | A | B |
| 12 | SUS444 | 10 | Performed | A | B |
| 13 | SUS444 | 60 | Performed | A | B |
| 14 | SUS444 | 10 | Performed | B | B |
| 15 | SUS304 | 25 | Performed | A | B |
| 16 | SUS444 | 60 | Performed | A | D |
| 17 | SUS444 | 10 | - | A | B |

The stainless steel substrate of each test number excluding Test No. 17 was subjected to an electrical discharge treatment (indicated by "Performed" in the column "Electrical Discharge Treatment" in Table 1). The electrical discharge treatment was performed using a discharge amount in the range of 800 to 2000 (W × min/m²). On the other hand, in Test No. 17 an electrical discharge treatment was not performed (indicated by "-" in the column "Electrical Discharge Treatment" in Table 1).

A composition described in Table 1 was applied to the stainless steel substrate of each test number. Composition "A" was prepared by dropwise adding a hydrolysis solution made by mixing 0.3 g of acetic acid and 35 g of water to a mixture of 89 g of methyltriethoxysilane, 76 g of tetramethoxysilane, and 67 g of 2-ethoxyethanol over a period of two to three hours. Composition "B" was prepared by dropwise adding a hydrolysis solution made by mixing 0.3 g of acetic acid and 35 g of water to a mixture of 120 g of phenyltriethoxysilane and 65 g of ethanol over a period of two to three hours.

Application of the composition was performed by the following method. Specifically, the composition was dropped onto the stainless steel substrate of each test number, and thereafter the stainless steel substrate was rotated at a speed of 400 rpm using a spin coating method. The stainless steel substrate of each test number to which the composition had been applied was then heated in a heat treatment furnace at 150°C for one minute to dry the composition. Hereinafter, the dried composition is also referred to as "dried film".

The stainless steel substrate with a dried film of each test number was subjected to a heat treatment under the heat treatment conditions shown in Table 1. Under heat treatment condition "A", the stainless steel substrate was held at 350 to 380°C for 10 to 200 minutes in an atmosphere with an oxygen concentration of 10 to 100 ppm, with the balance being nitrogen and impurities. Under heat treatment condition "B", the stainless steel substrate was held at 390 to 430°C for 10 to 200 minutes in an atmosphere with an oxygen concentration of 500 to 1000 ppm, with the balance being nitrogen and impurities. Under heat treatment condition "C", the stainless steel substrate was held at 430 to 450°C for 10 to 200 minutes in an atmosphere with an oxygen concentration of 1000 to 5000 ppm. Under heat treatment condition "D", the stainless steel substrate was held at 430 to 450°C for 10 to 200 minutes in an atmosphere consisting of hydrogen and impurities with an oxygen concentration of 0 ppm.

### [Evaluation tests]

A stainless steel foil of each test number was produced by the above process. The produced stainless steel foil of each test number was subjected to a siloxane polymer film thickness measurement test, an NaCl-type (Fe, Cr) oxide identification test, a repeated bend test, an insulation property test, and a deformability test.

### [Siloxane polymer film thickness measurement test]

The siloxane polymer film thickness of the stainless steel foil of each test number was measured using an SEM. A cross-section of the stainless steel foil of each test number was formed using a cross-section polishing method. The formed cross-section was observed using an SEM. The thickness of the siloxane polymer film was measured based on an obtained observation image. The thickness of the obtained siloxane polymer film is shown in Table 2.

**[Table 2]**

| TABLE 2 | | | | | |
|---|---|---|---|---|---|
| Test Number | Siloxane Polymer Film | (Fe, Cr) Oxide | Repeated Bend Test | Insulation Property Test | Deformability Test |
| | Thickness (µm) | Cr/Fe Ratio | | | |
| 1 | 0.4 | 0.2 | G | G | E |
| 2 | 0.5 | 0.2 | G | E | E |
| 3 | 0.5 | 0.3 | E | E | E |
| 4 | 0.5 | 0.4 | E | E | E |
| 5 | 0.5 | 0.5 | E | E | E |
| 6 | 0.5 | 0.6 | G | E | E |
| 7 | 0.5 | 0.5 | E | E | E |
| 8 | 0.5 | 0.5 | E | E | G |
| 9 | 0.5 | 0.5 | E | E | G |
| 10 | 1.0 | 0.5 | E | E | E |
| 11 | 1.5 | 0.5 | E | E | E |
| 12 | 3.0 | 0.5 | E | E | E |
| 13 | 3.0 | 0.5 | E | E | G |
| 14 | 0.5 | 0.5 | E | E | E |
| 15 | 0.5 | 0.5 | E | E | E |
| 16 | 1.5 | - | NA | E | G |
| 17 | 0.5 | - | NA | E | E |

### [NaCl-type (Fe, Cr) oxide identification test]

In the stainless steel foil of each test number, an (Fe, Cr) oxide having an NaCl-type crystal structure was identified by the method described above. An observation surface obtained by the method described above was subjected to crystal structure analysis by selected area electron diffraction using a TEM. A selected area aperture was inserted to set the observation field to 3 nm, and a diffraction pattern was obtained based on an electron diffraction method. In addition, elemental analysis of the area of the selected area was performed by EDS, and the elements present within the area were identified. The (Fe, Cr) oxide having an NaCl-type crystal structure was identified based on the obtained elements within the selected area and a diffraction pattern assumed based on the crystal structure. Note that, ICDD cards were used when performing the identification. Further, the ratio of Cr to Fe was calculated by dividing the Cr concentration (at%) obtained from the elemental analysis results for the area of the selected area by the obtained Fe concentration (at%). The obtained Cr/Fe atomic ratio in the (Fe, Cr) oxide is shown in Table 2. Note that, the contents of the elements in the (Fe, Cr) oxide having an NaCl-type crystal structure of each test number were as follows: Fe: 5 to 50 at%, Cr: 5 to 50 at%, and the balance: oxygen (O) and impurities.

### [Repeated bend test]

The stainless steel foil of each test number was subjected to a repeated bend test. A test specimen with dimensions of 50 mm × 100 mm was prepared by the method described above. The prepared test specimen was placed in a clamshell bending tester. A testing device with the model name DR11MR manufactured by YUASA SYSTEM Co., Ltd. was used as the clamshell bending tester. Regarding the test conditions, taking the bend radius of the stainless steel foil as "R" and the thickness of the stainless steel foil as "t", the bend radius was set so that R/t = 150.

Under the conditions described above, the number of repeated bends until a crack occurred on the siloxane polymer film surface was defined as the number of bending cycles. If the number of bending cycles according to the above definition was less than 50,000 cycles, it was determined that the stainless steel foil did not have excellent durability against bending stress ("NA (Not Acceptable)" in Table 2). If the number of bending cycles was in the range of 50,000 to less than 200,000 cycles, it was determined that the stainless steel foil had excellent durability against bending stress ("G (Good)" in Table 2). Furthermore, if the number of bending cycles was 200,000 cycles or more, it was determined that the stainless steel foil had even more excellent durability against bending stress ("E (Excellent)" in Table 2).

### [Insulation property test]

The insulating ability of the siloxane polymer film of the stainless steel foil of each test number was evaluated. Specifically, using an ion coater, a 1 mm diameter-sized platinum (Pt) film was deposited on the siloxane polymer film of each test number to form an electrode. A voltage of 100 V was applied between the electrode and the stainless steel substrate, and the leakage current value was measured. Measurement points where the leakage current value was 10 mA or more were determined to be short-circuited. Among 10 measurement points, if four or more measurement points were determined to be short-circuited, it was determined that the stainless steel foil did not have excellent insulating ability ("NA (Not Acceptable)" in Table 2). Among 10 measurement points, if two or three measurement points were determined to be short-circuited, it was determined that the stainless steel foil had excellent insulating ability ("G (Good)" in Table 2). Furthermore, among 10 measurement points, if one or less measurement point was determined to be short-circuited, it was determined that the stainless steel foil had even more excellent insulating ability ("E (Excellent)" in Table 2).

### [Deformability test]

The deformability of the stainless steel foil of each test number was evaluated. Specifically, a test specimen of 100 mm in length and 50 mm in width was cut out from the stainless steel foil of each test number. One short side of the test specimen of each test number was fixed and held horizontally. The test specimen of each test number was observed from the side, and the difference in height (amount of sag) between the unfixed short side and the fixed short side was measured. If the amount of sag was less than 10 mm, it was determined that the stainless steel foil did not have excellent deformability ("NA (Not Acceptable)" in Table 2). If the amount of sag was 10 to less than 50 mm, it was determined that the stainless steel foil had excellent deformability ("G (Good)" in Table 2). Furthermore, if the amount of sag was 50 mm or more, it was determined that the stainless steel foil had even more excellent deformability ("E (Excellent)" in Table 2).

### [Evaluation results]

The stainless steel foil of each of Test Nos. 1 to 15 contained an (Fe, Cr) oxide having an NaCl-type crystal structure at the interface between the stainless steel substrate and the siloxane polymer film that was formed on one of the surfaces of the stainless steel substrate. As a result, for these stainless steel foils, the number of bending cycles in the repeated bend test was 50,000 cycles or more, and thus these stainless steel foils had excellent durability against bending stress.

In addition, in the stainless steel foils of Test Nos. 3 to 5 and 7 to 15, the ratio of Cr to Fe in the (Fe, Cr) oxide having an NaCl-type crystal structure was 0.3 to 0.5. As a result, for these stainless steel foils, the number of bending cycles in the repeated bend test was 200,000 cycles or more, and thus these stainless steel foils had even more excellent durability.

Further, in the stainless steel foils of Test Nos. 2 to 15, the thickness of the siloxane polymer film was 0.5 µm or more. As a result, these stainless steel foils had even more excellent insulating ability in the insulation property test.

Furthermore, in the stainless steel foils of Test Nos. 1 to 7, 10 to 12, and 14 and 15, the thickness of the stainless steel substrate was 30 µm or less. As a result, these stainless steel foils had even more excellent deformability in the deformability test.

On the other hand, in the stainless steel foil of Test No. 16, the oxygen concentration in the atmosphere in the heat treatment was too low. As a result, this stainless steel foil did not contain an (Fe, Cr) oxide having an NaCl-type crystal structure at the interface between the stainless steel substrate and the siloxane polymer film. As a result, the number of bending cycles in the repeated bend test was less than 50,000 cycles, and thus this stainless steel foil did not have excellent durability against bending stress.

The stainless steel foil of Test No. 17 was not subjected to an electrical discharge treatment. As a result, this stainless steel foil did not contain an (Fe, Cr) oxide having an NaCl-type crystal structure at the interface between the stainless steel substrate and the siloxane polymer film. As a result, the number of bending cycles in the repeated bend test was less than 50,000 cycles, and thus this stainless steel foil did not have excellent durability against bending stress.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the gist thereof.

## Claims

1. A stainless steel foil, comprising:
a stainless steel substrate, and
a siloxane polymer film formed on at least one surface of the stainless steel substrate,
wherein, at an interface between the stainless steel substrate and the siloxane polymer film, the stainless steel foil further includes:
an (Fe, Cr) oxide having an NaCl-type crystal structure.

2. The stainless steel foil according to claim 1, wherein, in the (Fe, Cr) oxide having an NaCl-type crystal structure:
an atomic ratio of Cr to Fe is between 0.2 and 0.6.

3. The stainless steel foil according to claim 1, wherein:
a thickness of the siloxane polymer film is 0.3 to 1.0 µm.

4. The stainless steel foil according to claim 2, wherein:
a thickness of the siloxane polymer film is 0.3 to 1.0 µm.

5. The stainless steel foil according to any one of claim 1 to claim 4, wherein:
a thickness of the stainless steel substrate is 5 to 80 µm.
